# EUROPÄISCHE PATENTSCHRIFT

(11) **EP 3 939 770 B1**
(45) Veröffentlichungstag und Bekanntmachung des Hinweises auf die Patenterteilung: **18.09.2024**
(21) Anmeldenummer: 21195859.0
(22) Anmeldetag: 03.09.2018
(51) Int. Cl.: B29C 49/12, B29C 49/78

(54) **SYSTEM UND VERFAHREN ZUR ZUSTANDSÜBERWACHUNG VON LINEARANTRIEBEN VON STRECK-/BLASMASCHINEN**
SYSTEM AND METHOD FOR MONITORING THE STATE OF LINEAR DRIVES OF STRETCH AND BLOW MACHINES
SYSTÈME ET PROCÉDÉ DE SURVEILLANCE DE L'ÉTAT DES ENTRAÎNEMENTS LINÉAIRES DES MACHINES D'ÉTIRAGE / DE SOUFFLAGE

(30) Priorität: 01.09.2017 DE 102017120161
(43) Veröffentlichungstag der Anmeldung: 19.01.2022
(62) Teilanmeldung aus: 18768806.4
(73) Patentinhaber: Krones AG, 93073 Neutraubling (DE)
(72) Erfinder: Strauss, Johannes, 93073 Neutraubling (DE)
(74) Vertreter: Hannke Bittner & Partner mbB Regensburg

(56) Entgegenhaltungen:
- EP-A1- 1 066 149
- EP-A1- 1 484 160
- EP-B1- 1 066 149
- EP-B1- 2 048 556
- DE-A1- 102008 013 419
- JP-A- H11 348 101
- US-A1- 2010 078 861
- US-A1- 2012 139 169
- US-A1- 2017 157 834

## Beschreibung

Die vorliegende Erfindung betrifft einen Linearantrieb für eine Streck-/Blasmaschine, welcher einen Vergleich der Ist-Kraftaufnahme mit der Soll-Kraftaufnahme ermöglicht, sowie ein Verfahren zur Ermittlung eines Reinigungsintervalls auf Basis eines Vergleichs der Ist-Kraftaufnahme mit der Soll-Kraftaufnahme eines Linearantrieb für eine Streck-/Blasmaschine.

Aus dem Stand der Technik, z.B. US 2012 139 169 A1, EP 1 066 149 A1, US 2017 157 834 A1, US 2010 078 861 A1, JP H11 348 101 A, EP 1 484 160 A1, DE 10 2008 013 419 A1 und EP 2 048 556 B1, sind Streck-/Blasmaschinen zur Produktion von PET-Flaschen bekannt. Bei diesen wird beim Umformen von Vorformlingen (im Folgenden auch "Pre-Formen" genannt) zu Behältnissen, insbesondere Flaschen, der Streckvorgang der Pre-Formen zur optimalen Materialverteilung durch Reckstangen ausgeführt, die durch geregelte Servo-Linearantriebe angetrieben werden. Die Lagerung dieser Linearantriebe ist meist als Kunststoff-Gleitlager ausgeführt. Oftmals wird der magnetische Läuferfluss mit Permanentmagneten erzeugt. Bei derartigen Reckeinheiten (im Folgenden auch als Reckeinrichtung bezeichnet) ist es insbesondere wichtig, dass die Bewegung der Reckeinheit während des Blasprozesses einer in Zeit und Weg exakt vorgegeben Bewegung folgt. Sollte diese Vorgabe nicht eingehalten werden können, kann dies zur Verschlechterung der Behältnisqualität bzw. zu Störungen führen. Die Ausführungen in US 2010 078 861 A1 und EP 1 484 160 A1 entsprechen den Oberbegriffen der vorliegenden unabhängigen Ansprüche 1 und 5.

Bei den aus dem Stand der Technik bekannten Streck-/Blasmaschinen kann die Bewegung der Reckeinheit durch externe Störungen oder durch zu hohe Reibung negativ beeinflusst werden. Häufig ist eine zu starke Verschmutzung des Läufers die Ursache für zu hohe Reibung. Die Verschmutzung des Läufers wird durch seine Magnetisierung begünstigt, weil dadurch ferromagnetische Schmutzpartikel angezogen werden und sich darauf dauerhaft anlagern können.

Eine weitere Ursache für eine negative Beeinflussung der Bewegung der Reckeinheit könnte eine fehlerhaft montierte Reckeinheit sein. Bei vielen auf dem Markt befindlichen Ausführungsformen gibt es zusätzlich zur Motorlagerung eine Lagerung der extern angebrachten Reckstangen an einem Schlitten. Dadurch ist die Gesamtlagerung überbestimmt, wodurch bei nicht exakter Montage ein Verspannen der Reckeinheit auftreten kann.

Addieren sich diese negativen Einflüsse zu einer unzulässigen Belastung des Reckantriebes kann dies in einem Ausfall bzw. einer Störung der Reckeinheit resultieren. Um einen solchen Ausfall der Reckeinheit zu verhindern, ist es üblich den Läufer in regelmäßigen Abständen zu reinigen. Je Verschmutzungsgrad der Umgebung unterscheiden sich die notwendigen Intervalle für die Reinigung sehr stark. Insbesondere der Verschmutzungsgrad mit (metallischen) Partikeln bewirkt starke Änderungen des Wartungsintervalls. Da sich diese Umgebungsbedingungen während des Betriebs einer Streck-/Blasmaschinen ändern können, ist es schwierig ein allgemein passendes Wartungsintervall zu bestimmen um kostenoptimal arbeiten zu können. Zusätzlich kann durch die oben beschriebenen Verspannungen der während des Betriebs noch tolerierbare Verschmutzungsgrad in unbekannter Weise verändert werden, so dass Voraussagen über ein optimales Wartungsintervall nicht möglich sind.

Der vorliegenden Erfindung liegt daher die Aufgabe zugrunde, einen Linearantrieb für eine Streck-/Blasmaschine bereitzustellen, welcher Betriebsparameter überwacht und Hinweise auf eine notwendige Wartung liefert. Außerdem ist es Aufgabe der Erfindung, ein Verfahren zur Ermittlung eines optimalen Wartungsintervalls für einen Linearantrieb für eine Streck-/Blasmaschine bereitzustellen.

Diese Aufgabe wird einerseits durch einen Linearantrieb für eine Streck-/Blasmaschine nach Anspruch 1 gelöst.

Ein solcher Linearantrieb für eine Streck-/Blasmaschine ist in der Lage, alle benötigten Informationen aus der Antriebsregelung zur Identifizierung der Reibung im System (bzw. der Reckeinheit) während des normalen Betriebes zu ermitteln und auszuwerten. Dabei ist eine sehr präzise Bestimmung der Reibung vorteilhaft, da diese einen wesentlichen Einfluss auf die Notwendigkeit einer Wartung hat. Obwohl die Reibung nur einen geringen Anteil an allen im System bzw. des Linearantriebs auftretenden Kräften hat, ist durch einen solchen Linearantrieb die Überwachung der Reibung möglich.

In einer bevorzugten Ausführungsform ist der Kraftsensor ein Detektor für die zur Bewegung einer Reckstange notwendige Stromaufnahme. Dies hat sich als vorteilhaft erwiesen, da ein solcher Detektor sehr kompakt realisierbar ist und daher vergleichsweise einfach in Bestehende Anlagen integrierbar ist. Darüber hinaus hat sich herausgestellt, dass die Stromaufnahme ein besonders geeigneter Parameter zur Ermittlung der im System während der Bewegung der Reckstange auftretenden Reibung ist.

In einer bevorzugten Ausführungsform sind die Daten für eine Soll-Kraftaufnahme des Linearantriebs im Betrieb aus Parametern errechnet, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit umfasst. Dadurch ist es möglich, das System auf sich häufig ändernde Prozessparameter, die die am Reckantrieb auftretenden Kräfte dominieren, ein- oder umzustellen. Bevorzugt setzt sich die Kraft am Linearantrieb aus der Gewichtskraft der bewegten Teile, aus der Trägheitskraft der bewegten Teile (Bewegungsprofil abhängig) und aus der Kraft, die durch den Druck in dem Behältnis entsteht und auf den horizontalen Querschnitt der Reckstange wirkt, zusammen.

Da das Bewegungsprofil bekannt ist, kann die daraus resultierende Kraft berechnet werden. Ebenso ist die während des Umformungsprozesses zu bewegente Masse bekannt oder kann vergleichsweise einfach ermittelt werden. Die pneumatisch wirkenden Flächen sind bekannt, so dass auf Basis des Blasdrucks in dem Behältnis, welcher in bestehenden Umformungsanlagen teilweise bereits zur Prozessbeobachtung ständig überwacht wird, der darauf wirkende Druck ermittelt werden kann. Aus diesen Informationen wird bevorzugt ein Modell berechnet, welches die zu erwartende Kraft am Linearantrieb voraussagen kann. Werden die oben genannten Daten zugrunde gelegt, ist die einzige Unbekannte die Reibkraft an der Reckeinheit. Zu deren Ermittlung könnte in einer bevorzugten Ausführungsform beispielsweise während eines Optimierungsprozesses das Modell mit unterschiedlichen Werten für die Reibkraft simuliert werden, bis die aus dem Modell ermittelte Kraftaufnahme sich der gemessenen Kraftaufnahme bis auf eine vorgegebene Maximalabweichung angenähert hat.

Der in der Speichereinrichtung abgelegte Datensatz umfasst eine Vielzahl von Daten, die die zur Bewegung der Reckstange notwendige Kraft zu verschiedenen Zeitpunkten während des Reckvorgangs umfassen. In einer weiter bevorzugten Ausführungsform umfasst ein Datensatz mindestens 2, bevorzugt mindestens 10 besonders bevorzugt mindestens 50 Datenpunkte, die die zur Bewegung der Reckstange notwendige Kraft zu verschiedenen Zeitpunkten abbilden. In einer weiter bevorzugten Ausführungsform umfasst der Datensatz ein kontinuierliches Profil der zur Bewegung der Reckstange notwendige Kraft über die Prozessdauer.

In einer bevorzugten Ausführungsform enthält der Datensatz eine Formel mittels der, für jeden Zeitpunkt während des Prozesses, die jeweilige Soll-Kraftaufnahme in einer Berechnungseinrichtung berechenbar ist. Bevorzugt handelt es sich bei der Berechnungseinrichtung um einen Mikroprozessor.

In einer bevorzugten Ausführungsform umfasst die Speichereinrichtung eine Vielzahl von Datensätzen für die Soll-Kraftaufnahme des Linearantriebs für verschiedene Umformungen von Vorformlingen zu Behältnissen. Dadurch ist es möglich, das System schnell auf geänderte Prozessbedingungen umzustellen. Beispielsweise wird es so ermöglicht bei einer Produktumstellung, bei der für den Streck-/Blasprozess beispielsweise andere Vorformlinge genutzt und/oder andere Behältnisse produziert werden, weiterhin die bei der Bewegung der Reckstange auftretenden Reibkraft zu überwachen. Somit wird es möglich, die Verunreinigung der Reckeinheit unabhängig vom aktuell produzierten Produkt anhand der zu überwindenden Reibkraft ermitteln zu können.

Der Linearantrieb ist bevorzugt Teil einer Vorrichtung zum Umformen von Kunststoffvorformlingen zu Kunststoffbehältnissen, bevorzugt einer Streck-/Blasmaschine. In einer solchen Vorrichtung werden Kunststoffvorformlinge zunächst in einer Heizstrecke thermisch konditioniert und anschließend durch Beaufschlagung mit einem flüssigen oder gasförmigen (und somit fließfähigen) Medium expandiert. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Bei einer Streck-/Blasmaschine werden die Vorformlinge vor und/oder während der Expansion mittels einer Reckstange in Längsrichtung gedehnt. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Weiterhin betrifft die Erfindung ein Verfahren zur Ermittlung eines Reibwerts nach Anspruch 5
Überschreitet die Ist-Kraftaufnahme die Soll-Kraftaufnahme um einen zuvor ermittelten Wert, kann dies auf eine erhöhte Reibung bei der Bewegung der Reckstange zurückzuführen sein. Tritt eine solche Situation auf, wird daher ein Signal ausgegeben, das auf die Notwendigkeit einer zeitnahen Wartung hinweist.

Bevorzugt werden die Informationen aus der Antriebsregelung (insbesondere die Ist-Kraftaufnahme) zur Identifizierung der Reibung im System "Reckeinheit" während des normalen Betriebes verwendet. Dabei ist es wichtig eine sehr präzise Bestimmung der Reibung durchzuführen, was sehr schwierig ist, da die auftretenden Kräfte beim normalen Prozess stark dominierend sind und die Reibkraft nur einen geringen Anteil an der gesamt Kraft am Linearantrieb darstellt. Die beim Antrieb zu überwindende Reibkraft hat somit üblicherweise nur einen geringen Anteil an der gesamten Kraft, die am Linearantrieb aufzubringen ist. Des Weiteren können sich viele Prozessparameter, die die Kraft am Reckantrieb dominieren, ständig ändern. Die Kraft am Linearantrieb setzt sich zusammen aus der Gewichtskraft der bewegten Teile, aus der Trägheitskraft der bewegten Teile (Bewegungsprofil abhängig) und aus der Kraft, die durch den Druck in der Flasche entsteht und auf den horizontalen Querschnitt der Reckstange wirkt.

Bevorzugt ist eine Verfahrensvariante, bei der die Daten für eine Soll-Kraftaufnahme des Linearantriebs im Betrieb aus Parametern errechnet werden, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit umfasst. Es hat sich gezeigt, dass diese Parameter einen wesentlichen Einfluss auf die Kraftaufnahme des Linearantriebs im Betrieb haben, so dass Abweichungen von der daraus ermittelten Soll-Kraftaufnahme auf unerwünschte Zustände hinweisen können.

Ein weiteres Problem besteht darin, dass einige der genannten Prozessparameter, die die Kraft am Reckantrieb dominieren, sich während des Prozesses ändern können. Beispiele hierfür sind die Trägheitskraft der bewegten Teile (Bewegungsprofil abhängig) und der Gegendruck, der sich aus dem Druck des zu verformenden Behältnisses auf den horizontalen Querschnitt der Reckstange ergibt. Auch der Gasdruck im Inneren des Behältnisses kann als variable Größe den Gegendruck beeinflussen.

Sowohl das Bewegungsprofil als auch die zu bewegente Masse ist üblicherweise bekannt oder kann einfach bestimmt werden. Die pneumatisch wirkenden Flächen sind bekannt und der Blasdruck in der Flasche wird zur Prozessbeobachtung in modernen Umformungseinrichtungen bereits überwacht und ständig gemessen.

In einer bevorzugten Verfahrensvariante wird aus zumindest einigen der oben genannten Daten ein Modell berechnet, das die zu erwartende Kraft am Linearantrieb voraussagen kann. Damit ist die einzige Unbekannte die Reibkraft an der Reckeinheit. In einem folgenden Schritt wird die Reibkraft in einem Optimierungsverfahren ermittelt, bei dem das Modell so lange mit unterschiedlichen Werten für die Reibkraft simuliert, bis die Ergebnisse aus dem Modell am besten mit der gemessenen Kraft aus dem Antriebsregler zusammenpassen. Bevorzugt wird somit aus den oben genannten Parametern oder zumindest aus einer Auswahl der oben genannten Parameter zunächst ein Modell berechnet, welches eine Variable für die Reibkraft an der Reckeinheit enthält und erst in einem darauf folgenden Optimierungsverfahren werden durch Variation von Werten für die Reibkraft Simulationen der Soll-Kraftaufnahme des Linearantriebs durchgeführt, bis eine ausreichend gute Näherung zwischen der Simulation der Soll-Kraftaufnahme und der Ist-Kraftaufnahme des Linearantriebs (im - nicht verschmutzten - Idealzustand) erreicht ist.

Ist wie oben beschrieben die Soll-Kraftaufnahme für mindestens einige Zeitpunkte des Prozesses, bevorzugt über den gesamten Zeitverlauf des Prozesses, ermittelt, kann mit einer sehr hohen Genauigkeit die Reibkraft unabhängig von den sonstigen Prozessparametern während der Produktion bestimmt werden. Dies gelingt bei diesem Verfahren auch, wenn die gemessenen Werte sehr stark verrauscht sind, da durch die Simulation der komplette Sollverlauf der Kraft bekannt ist.

Zum Vergleichen der Ist-Kraftaufnahme mit der Soll-Kraftaufnahme wird ein Zeitbereich des Prozesses ausgewählt, der sich besonders gut zur Identifizierung des Reibwerts eignet. In einer weiteren bevorzugten Verfahrensvariante kann auch bereits beim Optimierungsverfahren ein Zeitbereich des Prozesses ausgewählt werden, der sich besonders gut zur Identifizierung des gewünschten Parameters eignet. Dadurch kann die Datenmenge und auch der Aufwand für die Ermittlung der Soll-Kraftaufnahme reduziert werden.

In einer bevorzugten Variante wird dazu das Model immer wieder mit variierenden Parametern berechnet und im gewünschten Vergleichszeitfenster mit der Messung der Ist-Kraftaufnahme des Linearantriebs (im - nicht verschmutzten - Idealzustand) verglichen. Bevorzugt fließt die Bewertung der normierten Summe aller Fehler aus diesem Vergleich in die Optimierung der Parameter so ein, dass der normierte Fehler im Vergleichszeitfenster möglichst schnell ein Minimum annimmt. Dadurch können sich unerwünschte Schwingungen und Rauschen aus dem Ergebnis automatisch herausmitteln.

In einer besonders bevorzugten Verfahrensvariante wird nicht nur der Betrag der Abweichung zwischen Soll-Kraftaufnahme und der Ist-Kraftaufnahme zur Identifizierung einer notwendigen Wartung betrachtet. Vielmehr ist es in einer bevorzugten Verfahrensvariante möglich, das aus der Lage und/oder Form des Verlaufs der Abweichung zwischen Soll-Kraftaufnahme und der Ist-Kraftaufnahme in einem Diagramm, in dem die Kraftaufnahme gegen die Zeit aufgetragen ist, auf die Art eines zu erwartenden Fehlers zu schließen. So ist es beispielsweise durch die modellbasierte Auswertung möglich, zwischen einer Verschmutzung und einer verspannten Lagerung zu unterscheiden. Insbesondere durch eine getrennt voneinander erfolgende Modellierung dieser beiden Mechanismen in der Simulation können diese getrennt voneinander betrachtet werden.

Somit ist es möglich, nicht nur die Wartungszyklen für die Reinigung der Reckeinheiten (auf Basis eines Anstiegs der ermittelten Reibwerte) bedarfsgerecht zu ermitteln, sondern auch etwaige Fehler können bei der Montage der Reckeinheiten schon bei Inbetriebnahme durch den Vergleich der Ist-Kraftaufnahme mit der Soll-Kraftaufnahme identifiziert und behoben werden.

Das oben beschriebene Verfahren erlaubt darüber hinaus ein genaueres Verständnis über die Abläufe während des Umformungsprozesses von einem Vorformling zu einem Behältnis zu gewinnen. So kann man beispielsweise aus der Modellierung Informationen zum Reckprozess gewinnen. Durch den Vergleich von Simulation und Messung kann zum Beispiel der Verlauf der notwendigen Kraft ermittelt werden, mit dem der Vorformling während dessen Umformung zum Behältnis der Bewegung der Reckstange entgegen wirkt. Eine Auswertung dieser Kraft ermöglicht eine Beurteilung des Streck-/Blasprozesses.

Weitere Vorteile und Ausführungsformen ergeben sich aus den beigefügten Zeichnungen.

Darin zeigen:
- Fig. 1: eine Ansicht einer Reckeinrichtung;
- Fig. 2: eine Ansicht einer anderen Ausführungsvariante einer Reckeinrichtung;
- Fig. 3: eine Detailansicht eines Blaskolbens;
- Fig. 4a: eine Darstellung des Verlaufs der Soll-Kraftaufnahme und der Ist-Kraftaufnahme über die Dauer eines Streck-Blasprozesses;
- Fig. 4b: eine Darstellung der Differenz des in Fig. 4a dargestellten Verlaufs der Soll-Kraftaufnahme und der Ist-Kraftaufnahme über die Dauer eines Streck-Blasprozesses; und
- Fig. 4c: eine Darstellung des Lageprofils des Linearantriebs über die Dauer eines Streck-Blasprozesses.

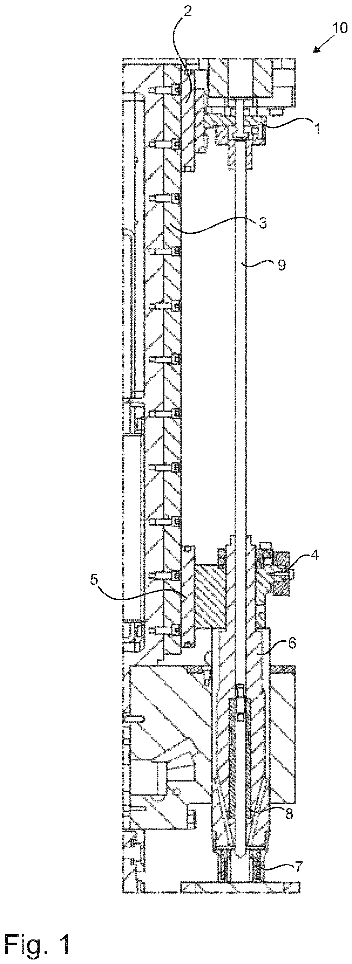

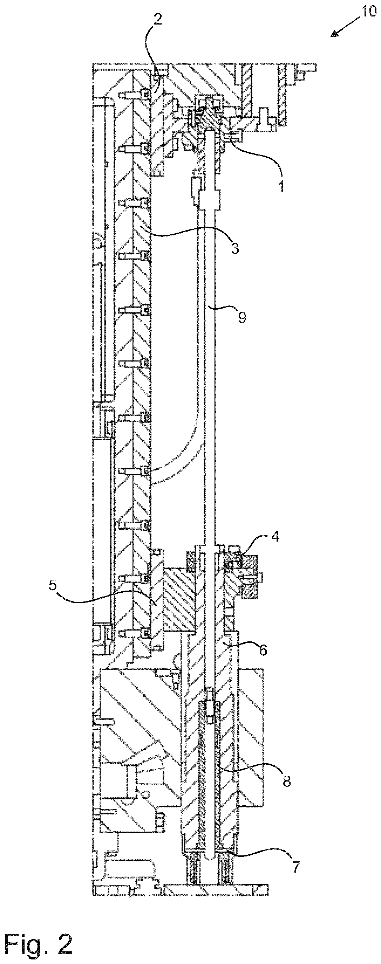

Figur 1 und Figur 2 zeigen jeweils eine Ansicht verschiedener Ausführungen einer Reckeinrichtung 10. Trotz der unterschiedlichen Ausgestaltung können gleiche oder verwendete Elemente mit denselben Bezugszeichen gekennzeichnet sein. Beide dargestellten Reckeinrichtungen umfassen einen Reckschlitten 1, der mittels eines Führungswagens 2 relativbeweglich bezüglich einer nicht im Detail dargestellten Führungsschiene 3 angeordnet ist.

Weiterhin ist ein Blasschlitten 4 gezeigt, welcher ebenfalls über einen Führungswagen 5 entlang der Führungsschiene 3 beweglich ist.

Außerdem ist ein Blaskolben 6 gezeigt, an dessen dem Reckschlitten 1 abgewandten Ende eine Blasdüse 7 angeordnet ist. Im Inneren des Blaskolbens befindet sich eine Führungshülse 8, in der die Reckstange 9 geführt ist. Die Reckstange 9 ist relativbeweglich bezüglich des Blaskolbens 6 und somit auch bezüglich des Blasschlittens 4 angeordnet. Die Relativbewegung wird durch ein Verschieben des Reckschlittens 1, mit dem die Reckstange 9 fest verbunden ist, bezüglich des Blasschlittens 4 realisiert. Bevorzugt wird das Verschieben mittels eines nicht gezeigten Elektromotors realisiert, dessen Stromaufnahme überwacht wird und aus dem die Ist-Kraftaufnahme ermittelt werden kann.

Möglichkeiten für eine Erhöhung der Ist-Kraftaufnahme können im Wesentlichen zwei Ursachen haben. Erste Ursache können Verunreinigungen von relativ zueinander beweglichen Teilen sein. Insbesondere auf der Reckstange 9 und der Führungsschiene 3 können sich Ablagerungen bilden, die einen erhöhten Reibwiderstand bewirken können. Insbesondere wenn der magnetische Läuferfluss mit Permanentmagneten erzeugt wird, ergibt sich die Problematik, dass der Läufer magnetisiert wird und magnetische Partikel anzieht. Diese bleiben aufgrund des Magnetismus haften und können sich auch derart anreichern, dass eine ordnungsgemäße Funktion der Umformungseinrichtung nicht mehr gewährleistet ist.

Außerdem oder zusätzlich dazu kann ein erhöhter Reibwert aus einer nicht exakten Montage oder unerwünschten Verschiebungen einzelner Baugruppen gegenüber einander resultieren, was zu einem Verspannen der Reckeinheit 10 in sich selbst führen kann. Diese negativen Einflüsse alleine oder in Kombination miteinander können zu einer unzulässigen Belastung des Reckantriebes führen, was in einem Ausfall bzw. einer Störung der Reckeinheit resultieren könnte.

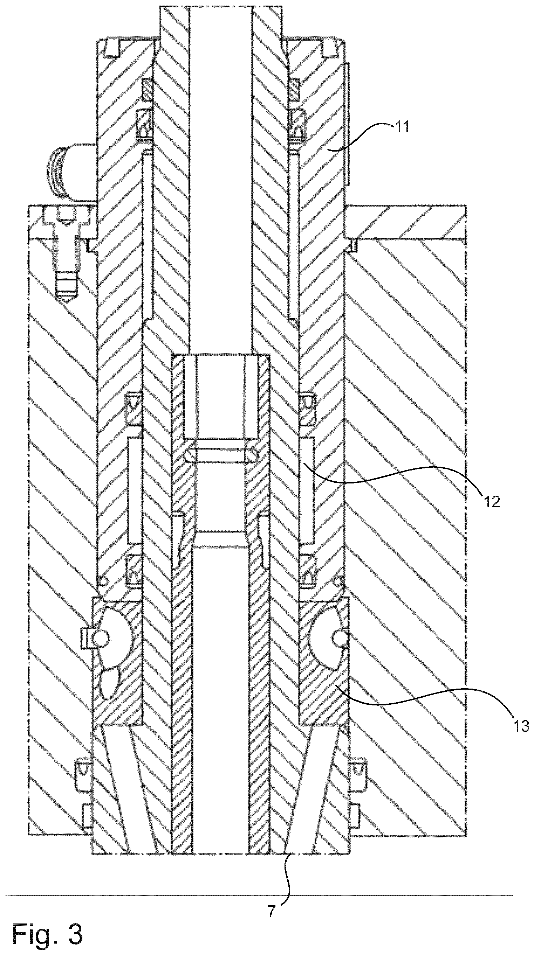

Wie oben erwähnt ist, sind die Massen aller Bauteile der Reckeinrichtung 10 bekannt. Somit können diese Werte in die Berechnung der Soll-Kraftaufnahme einfließen. Einen weiteren Faktor in dieser Berechnung liefern die Druckverhältnisse in dem Blaskolben und im (umzuformenden) Behältnis selbst. Ein Beispiel für einen Blaskolben ist in Figur 3 gezeigt. In den dargestellten Bereichen 11, 12 und 13 herrschen jeweils unterschiedliche Drücke. Während in dem Bereich 11 eine konstante Vorspannung von beispielsweise 10 bar aufrechterhalten wird, befindet sich der Bereich 12 üblicherweise konstant unter Umgebungsdruck. Demgegenüber verändert sich an der Ringfläche im Bereich 13 der Druck während des Blasprozesses. Der dort anliegende Druck entspricht zumindest zeitweise dem Blasdruck und ist abhängig von der jeweiligen Druckstufe. Der Druck kann hier beispielsweise bis zu 40 bar betragen. Der hier auf die Ringfläche 13 wirkende Gegendruck ist unter anderem auch abhängig von dem Durchmesser der Blasdüse 7 und/oder dem Flaschenhals.

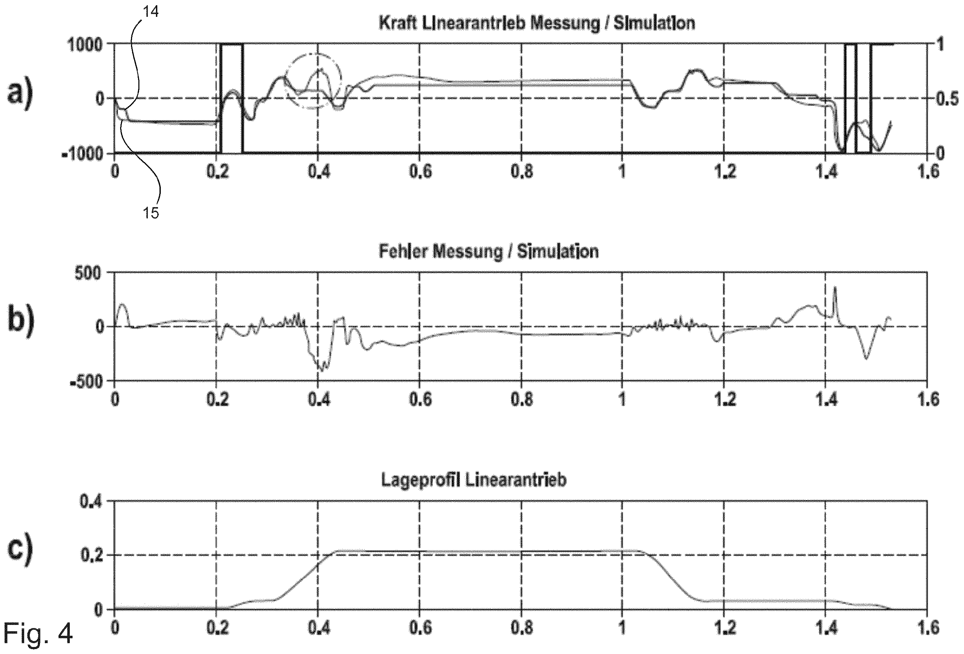

Die Figuren 4a - c zeigen jeweils Diagramme von Prozessparametern während eines Umformungsprozesses. Figur 4a zeigt eine Darstellung des Verlaufs der Soll-Kraftaufnahme (Linie 14), wie sie wie oben beschrieben über eine Simulation ermittelt wurde, und der Ist-Kraftaufnahme (Linie 15) über die Dauer eines Streck-/Blasprozesses. Der Streck-/Blasprozesses dauert im vorliegenden Beispiel etwa 1.5 Zeiteinheiten. Während dieser verändert der Linearantrieb seine Lage entlang des in Figur 4c dargestellten Lageprofils. Wie diesem zu entnehmen ist, verändert sich die Lage zunächst nicht, um dann (mit einer kleinen Stufe) bis zu einer maximalen Lageveränderung von etwa 0.2 Distanzeinheiten verschoben zu werden. In dieser Lage verbleibt der Linearantrieb unverändert für eine gewisse Zeit, bis er nach etwas mehr als 1.0 Zeiteinheiten eine inverse Bewegung zurück in die Ausgangsposition beginnt. Diese erreicht er nach einer zweistufigen Bewegung, von denen die erste deutlich länger beibehalten wird als die zweite, nach etwa 1.5 Zeiteinheiten.

Bei einem Vergleich der Soll-Kraftaufnahme 14 mit der Ist-Kraftaufnahme 15 in Figur 4a wird ersichtlich, dass diese über weite Zeitbereiche nahezu parallel verlaufen, nach etwa 0.4 Zeiteinheiten jedoch deutlich voneinander abweichen, um sich dann wieder aneinander anzunähern und erneut nahezu parallel zu verlaufen.

Subtrahiert man die Werte der Ist-Kraftaufnahme 15 von denjenigen der Soll-Kraftaufnahme 14 erhält man ein Diagramm, wie es in Figur 4b gezeigt ist. Um die Abweichungen deutlicher aufzuzeigen ist der Maßstab gegenüber der Darstellung in Figur 4a verändert worden. Abweichungen von der Null-Linie sind insbesondere nach 0.4 Zeiteinheiten zu erkennen.

In Zusammenschau mit der Darstellung aus Figur 4c und Betrachtung des gesamten Streck-/Blasprozesses kann abgeleitet werden, dass die Abweichung der gemessenen Kraft von dem in der Simulation ermittelten Wert daraus resultiert, dass die Reckkraft zur Verformung des Vorformlings in der zugrundeliegenden Modellierung nicht berücksichtigt wurde. Aus derartigen Abweichungen lassen sich somit Informationen über den Ablauf des Streck-/Blasprozesses und insbesondere über die zu verschiedenen Zeitpunkten notwendige Kraft zur Verlagerung des Linearantriebs ableiten.

### Bezugszeichenliste

- 1: Reckschlitten
- 2: Führungswagen
- 3: Führungsschiene
- 4: Blasschlitten
- 5: Führungswagen
- 6: Blaskolben
- 7: Blasdüse
- 8: Führungshülse
- 9: Reckstange
- 10: Reckeinrichtung, Reckeinheit
- 11: Bereich
- 12: Bereich
- 13: Bereich, Ringfläche
- 14: Soll-Kraftaufnahme
- 15: Ist-Kraftaufnahme

## Patentansprüche

1. Linearantrieb für eine Streck-/Blasmaschine
umfassend
einen Kraftsensor zur Erfassung der Ist-Kraftaufnahme (15) des Linearantriebs im Betrieb,
eine Speichereinrichtung in der Daten für eine Soll-Kraftaufnahme (14) des Linearantriebs im Betrieb abgelegt sind, wobei die Speichereinrichtung eine Vielzahl von Datensätzen für die Soll-Kraftaufnahme (14) des Linearantriebs für verschiedene Umformungen von Vorformlingen zu Behältnissen umfasst, wobei ein in der Speichereinrichtung abgelegter Datensatz eine Vielzahl von Daten umfasst, die die zur Bewegung der Reckstange notwendige Kraft zu verschiedenen Zeitpunkten während des Reckvorgangs umfassen,
**gekennzeichnet durch,**
eine Vergleichseinrichtung zum Vergleichen der Ist-Kraftaufnahme mit der Soll-Kraftaufnahme (14) über einen Zeitbereich des Prozesses, der sich zur Identifizierung des Reibwerts eignet, und
einen Signalgeber zur Ausgabe eines Signals bei Überschreiten einer zuvor definierten Abweichung zwischen Soll-Kraftaufnahme (14) und Ist-Kraftaufnahme (15).

2. Linearantrieb nach Anspruch 1,
**dadurch gekennzeichnet, dass**
der Kraftsensor ein Detektor für die zur Bewegung einer Reckstange (9) notwendige Stromaufnahme ist.

3. Linearantrieb nach einem der vorangegangenen Ansprüche,
**dadurch gekennzeichnet, dass**
die Daten für eine Soll-Kraftaufnahme (14) des Linearantriebs im Betrieb aus Parametern errechnet sind, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit (10) umfasst.

4. Linearantrieb nach einem der vorangegangenen Ansprüche,
**dadurch gekennzeichnet, dass**
ein in der Speichereinrichtung abgelegter Datensatz mindestens 2, bevorzugt mindestens 10 besonders bevorzugt mindestens 50 Datenpunkte umfasst, die die zur Bewegung der Reckstange notwendige Kraft zu verschiedenen Zeitpunkten abbilden.

5. Verfahren zur Ermittlung eines Reibwerts eines Linearantriebs für eine Streck-/Blasmaschine, umfassend die Schritte:
- ermitteln einer Soll-Kraftaufnahme (14) des Linearantriebs im Betrieb, aus einem in der Speichereinrichtung abgelegten Datensatz, der eine Vielzahl von Daten umfasst, die die zur Bewegung der Reckstange notwendige Kraft zu verschiedenen Zeitpunkten während des Reckvorgangs umfassen, wobei die Speichereinrichtung eine Vielzahl von Datensätzen für die Soll-Kraftaufnahme (14) des Linearantriebs für verschiedene Umformungen von Vorformlingen zu Behältnissen umfasst,
- erfassen einer Ist-Kraftaufnahme (15) des Linearantriebs im Betrieb mittels eines Kraftsensors,
**gekennzeichnet durch** die Schritte:
- vergleichen der Ist-Kraftaufnahme (15) mit der Soll-Kraftaufnahme (14) über einen Zeitbereich des Prozesses, der sich zur Identifizierung des Reibwerts eignet,
- ausgeben eines Signals bei Überschreiten einer zuvor definierten Abweichung zwischen Soll-Kraftaufnahme (14) und Ist-Kraftaufnahme (15).

6. Verfahren nach Anspruch 5,
**dadurch gekennzeichnet, dass**
der Kraftsensor die zur Bewegung einer Reckstange (9) notwendige Stromaufnahme detektiert.

7. Verfahren nach Anspruch 5 oder 6,
**dadurch gekennzeichnet, dass**
die Daten für eine Soll-Kraftaufnahme des Linearantriebs im Betrieb aus Parametern errechnet werden, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit (10) umfasst.

8. Verfahren nach Anspruch 7,
**dadurch gekennzeichnet, dass**
aus den Parametern zunächst ein Modell berechnet wird, welches eine Variable für die Reibkraft an der Reckeinheit (10) enthält und erst in einem darauf folgenden Optimierungsverfahren durch Variation von Werten für die Reibkraft Simulationen der Soll-Kraftaufnahme (14) des Linearantriebs durchgeführt werden, bis eine ausreichend gute Näherung zwischen der Simulation der Soll-Kraftaufnahme (14) und der Ist-Kraftaufnahme (15) des Linearantriebs erreicht ist.

9. Verfahren nach -Anspruch 8,
**dadurch gekennzeichnet, dass**
bereits beim Optimierungsverfahren ein Zeitbereich des Prozesses ausgewählt wird, der sich besonders gut zur Identifizierung des gewünschten Parameters eignet, um die Datenmenge und auch der Aufwand für die Ermittlung der Soll-Kraftaufnahme zu reduzieren wobei dazu das Model immer wieder mit variierenden Parametern berechnet und im gewünschten Vergleichszeitfenster mit der Messung der Ist-Kraftaufnahme des Linearantriebs, bevorzugt im nicht verschmutzten Idealzustand, verglichen wird.

10. Verfahren nach einem der Ansprüche 5 - 9,
**dadurch gekennzeichnet, dass**
auf Basis eines Anstiegs der ermittelten Reibwerte beim Vergleich der Ist-Kraftaufnahme (15) mit der Soll-Kraftaufnahme (14) ein bedarfsgerechter Wartungszyklus für die Reinigung der Reckeinheit (10) ermittelt wird.

11. Verfahren nach einem der Ansprüche 5-10,
**dadurch gekennzeichnet, dass**
nicht nur der Betrag der Abweichung zwischen Soll-Kraftaufnahme und der Ist-Kraftaufnahme zur Identifizierung einer notwendigen Wartung betrachtet wird, sondern aus der Lage und/oder Form des Verlaufs der Abweichung zwischen Soll-Kraftaufnahme und der Ist-Kraftaufnahme in einem Diagramm, in dem die Kraftaufnahme gegen die Zeit aufgetragen ist, auf die Art eines zu erwartenden Fehlers geschlossen wird.

12. Verfahren nach einem der Ansprüche 8-11,
**dadurch gekennzeichnet, dass**
bei einer Produktumstellung, bei der für den Streck-/Blasprozess andere Vorformlinge genutzt und/oder andere Behältnisse produziert werden, weiterhin die bei der Bewegung der Reckstange auftretende Reibkraft überwacht wird.

13. Verfahren nach einem der Ansprüche 5-12,
**dadurch gekennzeichnet, dass**
das Ermitteln einer Soll-Kraftaufnahme (14) des Linearantriebs im Betrieb, aus einem in der Speichereinrichtung abgelegten Datensatz erfolgt, der mindestens 2, bevorzugt mindestens 10 besonders bevorzugt mindestens 50 Datenpunkte umfasst, die die zur Bewegung der Reckstange notwendige Kraft zu verschiedenen Zeitpunkten abbilden.

## Claims

1. Linear drive for a stretch and/or blow moulding machine,
comprising
a force sensor for detecting the actual force absorption (15) of the linear drive during operation,
a storage device in which data for a desired force absorption (14) of the linear drive during operation are stored, wherein the storage device has a plurality of data of data sets for the desired force absorption (14) of the linear drive for different reshapings of preforms into containers, wherein a data set stored in the storage device comprises a plurality of data which comprise the force necessary for movement of the stretching rod at different times during the stretching process,
**characterised in that**
a comparison devices for the comparison of the actual force absorption with the desired force absorption (14) over a time range of the process which is suitable for identification of the friction coefficient, and
a signal emitter for outputting a signal if a previously defined deviation between the desired force absorption (14) and actual force absorption (15) is exceeded.

2. Linear drive according to claim 1,
**characterised in that**
the force sensor is a detector for the current consumption necessary for movement of stretching rod (9).

3. Linear drive to one of the preceding claims,
**characterised in that**
the data for a desired force absorption (14) of the linear drive during operation are calculated from parameters which are selected from a group comprising the weight force of the moving parts, the inertial force of the moving parts depending upon the underlying movement profile, the pressure prevailing in the container or the preform, the pneumatically effective surfaces of the system and the frictional force of the stretching unit (10).

4. Linear drive according to one of the preceding claims,
**characterised in that**
the data set stored in the storage device comprises at least 2, preferably at least 10, particularly preferably at least 50 data points, which map the force necessary to move the stretching rod at different times.

5. Method for determination of a friction coefficient of a linear drive for a stretching and/or blow moulding machine, comprising the following steps:
- determining a desired force absorption (14) of the linear drive during operation from data sets stored in the storage device, which comprise a plurality of data which comprise the force necessary for movement of the stretching rod at different times during the stretching process, wherein the storage device has a plurality of data of data sets for the desired force absorption (14) of the linear drive for different reshapings of preforms into containers,
- determining an actual force absorption (15) of the linear drive during operation by means of a force sensor,
**characterised by** the steps:
- comparing the actual force absorption (15) with the desired force absorption (14) over a time period of the process which is suitable to identify the friction coefficient,
- outputting a signal when a previously defined deviation between desired force absorption (14) and actual force absorption (15) is exceeded.

6. Method according to claim 5,
**characterised in that**
the force sensor detects the current consumption necessary for movement of a stretching rod (9).

7. Method according to claim 5 or 6,
**characterised in that**
the data for a desired force absorption (14) of the linear drive during operation are calculated from parameters which are selected from a group comprising the weight force of the moving parts, the inertial force of the moving parts depending upon the underlying movement profile, the pressure prevailing in the container or the preform, the pneumatically effective surfaces of the system and the frictional force of the stretching unit (10).

8. Method according to claim 7,
**characterised in that**
from the parameters first of all a model is calculated which includes a variable for the frictional force on the stretching unit (10) and only in a subsequent optimisation process are simulations of the desired force absorption (14) of the linear drive carried out by variation of values for the frictional force simulation until a sufficiently good approximation between the simulation of the desired force absorption (14) and the actual force absorption (15) of the linear drive is achieved.

9. Method according to claim 8,
**characterised in that**
already in the optimisation process a time period of the process is selected which is particularly suitable for identifying the desired parameters, in order to reduce the quantity of data and also the cost of determining the desired force absorption, wherein the model is repeatedly calculated with varying parameters and is compared in the required comparison time window with the measurement of the actual force absorption of the linear drive, preferably in the uncontaminated ideal state.

10. Method according to one of claims 5-9,
**characterised in that**
on the basis of the comparison of the actual force absorption (15) with the desired force absorption (14) a required maintenance cycle for the cleaning of the stretching unit (10) is determined.

11. Method according to one of claims 5 - 10,
**characterised in that**
not only is the amount of the deviation between the desired force absorption and the actual force absorption is considered for identification of necessary maintenance, but a conclusion is drawn to the nature of a error to be expected from the location and/or shape of the characteristic of the deviation between the desired force absorption and the actual force absorption in a diagram in which the force absorption is plotted against the time.

12. Method according to one of claims 8 - 11,
**characterised in that**
in the event of a product changeover, in which for the stretching/blow moulding process other preforms are used and/or other containers are produced, the frictional force occurring during the movement of the stretching rod is furthermore monitored.

13. Method according to one of claims 5 - 12,
**characterised in that**
the determination of a desired force absorption (14) of the linear drive during operation from a data set stored in the storage device is carried out which comprises at least 2, preferably at least 10, particularly preferably at least 50 data points, which map the force necessary to move the stretching rod at different times.

## Revendications

1. Entraînement linéaire pour une machine d'étirage-soufflage
comprenant
un capteur de force pour détecter l'absorption de force réelle (15) de l'entraînement linéaire lors du fonctionnement,
un dispositif mémoire dans lequel des données pour une absorption de force théorique (14) de l'entraînement linéaire lors du fonctionnement sont déposées, dans lequel le dispositif mémoire comprend une pluralité d'enregistrements de données pour l'absorption de force théorique (14) de l'entraînement linéaire pour différents formages de préformes en contenants, dans lequel un ensemble de données stocké dans le dispositif mémoire comprend une pluralité de données comprenant la force nécessaire pour déplacer la tige d'étirement à différents moments pendant l'opération d'étirement,
**caractérisé par**
un dispositif de comparaison pour comparer l'absorption de force réelle à l'absorption de force théorique (14) sur une plage de temps du processus qui convient à l'identification du coefficient de frottement, et un émetteur de signaux pour l'émission d'un signal lors du dépassement d'un écart préalablement défini entre l'absorption de force théorique (14) et l'absorption de force réelle (15).

2. Entraînement linéaire selon la revendication 1,
**caractérisé en ce que**
le capteur de force est un détecteur pour la consommation de courant nécessaire au mouvement d'une tige d'étirage (9).

3. Entraînement linéaire selon l'une quelconque des revendications précédentes,
**caractérisé en ce que**
les données pour une absorption de force théorique (14) de l'entraînement linéaire en fonctionnement sont calculées à partir de paramètres choisis dans un groupe comprenant le poids des pièces mobiles, la force d'inertie des pièces mobiles dépendant du profil de mouvement sous-jacent, la pression régnant dans le récipient ou la préforme, les surfaces à action pneumatique du système et la force de frottement de l'unité d'étirage (10).

4. Entraînement linéaire selon l'une quelconque des revendications précédentes,
**caractérisé en ce que**
un jeu de données enregistré dans le dispositif mémoire comprend au moins 2, de préférence au moins 10, de manière particulièrement préférée au moins 50 points de données, qui représentent la force nécessaire au mouvement de la tige d'étirage à différents moments.

5. Procédé pour déterminer un coefficient de frottement d'un entraînement linéaire pour une machine d'étirage-soufflage, comprenant les étapes :
- de calcul d'une absorption de force théorique (14) de l'entraînement linéaire lors du fonctionnement, à partir d'un jeu de données stocké dans le dispositif mémoire, qui comprend une pluralité de données qui comprennent la force nécessaire pour déplacer la tige d'étirage à différents moments pendant l'opération d'étirage, le dispositif mémoire comprenant une pluralité de jeux de données pour l'absorption de force théorique (14) de l'entraînement linéaire pour différents formages de préformes en contenants,
- la détection d'une absorption de force réelle (15) de l'entraînement linéaire lors du fonctionnement au moyen d'un capteur de force,
**caractérisé par** les étapes
- la comparaison de l'absorption de force réelle (15) à l'absorption de force théorique (14), durant une plage de temps du processus qui convient bien à l'identification du coefficient de frottement,
- l'émission d'un signal lors du dépassement d'un écart préalablement défini entre l'absorption de force théorique (14) et l'absorption de force réelle (15).

6. Procédé selon la revendication 5,
**caractérisé en ce que**
le capteur de force détecte la consommation de courant nécessaire au mouvement d'une tige d'étirage (9).

7. Procédé selon la revendication 5 ou 6,
**caractérisé en ce que**
les données pour une absorption de force théorique de l'entraînement linéaire en fonctionnement sont calculées à partir de paramètres choisis dans un groupe comprenant le poids des pièces mobiles, la force d'inertie des pièces mobiles dépendant du profil de mouvement sous-jacent, la pression régnant dans le récipient ou la préforme, les surfaces à action pneumatique du système et la force de frottement de l'unité d'étirage (10).

8. Procédé selon la revendication 7,
**caractérisé en ce que**
un modèle est tout d'abord calculé à partir des paramètres, lequel contient une variable pour la force de frottement sur l'unité d'étirage (10) et ce n'est que dans un procédé d'optimisation suivant que des simulations de l'absorption de force théorique (14) de l'entraînement linéaire sont réalisées par variation de valeurs pour la force de frottement, jusqu'à ce qu'une approximation suffisamment satisfaisante entre la simulation de l'absorption de force théorique (14) et l'absorption de force réelle (15) de l'entraînement linéaire soit atteinte.

9. Procédé selon la revendication 8,
**caractérisé en ce que**
déjà lors de la procédure d'optimisation, une plage de temps du processus est choisie qui convient à l'identification du paramètre souhaité, afin de réduire la quantité de données ainsi que le travail nécessaire à la détermination de l'absorption de force théorique, le modèle étant à cet effet toujours calculé avec des paramètres variables et comparé, dans la fenêtre temporelle de comparaison souhaitée, à la mesure de l'absorption de force théorique de l'entraînement linéaire, de préférence dans un état idéal non encrassé.

10. Procédé selon l'une quelconque des revendications 5 - 9,
**caractérisé en ce que**
un cycle de maintenance adapté aux besoins pour le nettoyage de l'unité d'étirage (10) est déterminé sur la base de la comparaison de l'absorption de force réelle (15) à l'absorption de force théorique (14).

11. Procédé selon l'une quelconque des revendications 5 - 10,
**caractérisé en ce que**
non seulement la valeur de l'écart entre l'absorption de force théorique et l'absorption de force réelle pour identifier une maintenance nécessaire est calculée, mais on déduit aussi le type d'erreur à attendre de la position et/ou de la forme de l'évolution de l'écart entre l'absorption de force de consigne et l'absorption de force réelle dans un diagramme dans lequel l'absorption de force est tracée en fonction du temps.

12. Procédé selon l'une quelconque des revendications 8 - 11,
**caractérisé en ce que**
lors d'un changement de produit, lors duquel d'autres préformes sont utilisées pour le processus d'étirage-soufflage et/ou d'autres récipients sont produits, la force de frottement apparaissant lors du mouvement de la tige d'étirage continue à être surveillée.

13. Procédé selon l'une quelconque des revendications 5 - 12,
**caractérisé en ce que**
la détermination d'une absorption de force théorique (14) de l'entraînement linéaire en fonctionnement, s'effectue à partir d'un jeu de données stocké dans le dispositif mémoire, qui comprend au moins 2, de préférence au moins 10, de manière particulièrement préférée au moins 50 points de données, qui représentent la force nécessaire au mouvement de la tige d'étirage à différents moments.
